# FASCICULE DE BREVET EUROPEEN

(11) **EP 3 009 309 B1**
(45) Date de publication et mention de la délivrance du brevet: **06.12.2017**
(21) Numéro de dépôt: 15187035.9
(22) Date de dépôt: 28.09.2015
(51) Int. Cl.: B60R 21/235, B61F 19/00, B60R 21/36

(54) **DISPOSITIF DE SÉCURITÉ POUR UN VÉHICULE ET VÉHICULE ASSOCIÉ**
SICHERHEITSVORRICHTUNG FÜR FAHRZEUG, UND ENTSPRECHENDES FAHRZEUG
PROTECTION DEVICE FOR A VEHICLE AND CORRESPONDING VEHICLE

(30) Priorité: 15.10.2014 FR 1459876
(43) Date de publication de la demande: 20.04.2016
(73) Titulaire: ALSTOM Transport Technologies, 93400 Saint-Ouen (FR)
(72) Inventeur: LE-CORRE, Dominique, 67350 PFAFFENHOFFEN (FR)
(74) Mandataire: Lavoix

(56) Documents cités:
- WO-A1-2006/016801
- WO-A1-2007/022585
- DE-A1- 10 059 223
- DE-A1- 19 806 301
- NL-C1- 1 032 537

## Description

La présente invention concerne un dispositif de sécurité pour un véhicule, du type comprenant un système gonflable propre à être disposé devant une surface externe dudit véhicule, au moins un capteur propre à détecter un impact dans une zone prédéterminée du véhicule, et un système de gonflage propre à injecter un gaz sous pression dans le système gonflable, lors de la détection d'un impact par le ou les capteurs et le passage du dispositif de sécurité d'un état désactivé à un état activé.

L'invention s'applique au domaine de la sécurité des piétons, plus particulièrement à la sécurité des piétons dans le cadre du trafic ferroviaire, notamment de la circulation des tramways.

L'impact d'un piéton avec un véhicule en mouvement conduit souvent à des blessures graves pour ledit piéton. Par exemple, lors d'un l'impact frontal entre un piéton et un tramway en mouvement, les risques de blessures à la tête pour le piéton sont élevés. De telles blessures sont susceptibles d'entraîner le décès du piéton.

DE10059223 qui est considéré comme l'état de la technique le plus proche de l'objet de la revendication 1, divulgue un dispositif de sécurité conforme le préambule de la revendication 1.

WO2007/022585 décrit un dispositif de sécurité comprenant un film, collé sur une surface d'un véhicule de manière à définir avec celle-ci, une unique chambre propre à recevoir un gaz sous pression. Un tel dispositif comporte également un dispositif d'injection de gaz destiné à injecter le gaz sous pression dans la chambre en cas d'impact. La chambre remplie de gaz a alors pour rôle d'amortir l'impact d'un individu contre ladite surface du véhicule, afin de réduire les risques de blessure pour l'individu.

Dans un tel dispositif, le film est collé, par son contour, à ladite surface. La chambre correspond alors au volume qui est compris entre la surface et le film, et qui est délimité, en périphérie, par le contour du film.

Néanmoins, un tel dispositif ne donne pas entière satisfaction.

En effet, dans un tel dispositif, lorsque la chambre est remplie de gaz, l'épaisseur de ladite chambre n'est pas uniforme. En particulier, lorsque la surface recouverte par le film est importante, la capacité du dispositif à amortir efficacement un choc est insuffisante, en particulier au niveau de la région périphérique du film.

En outre, en cas d'impact entre un piéton et la chambre, le gaz contenu dans la chambre a tendance à être chassé à l'écart de la zone d'impact, ce qui a pour effet de réduire la capacité d'amortissement de la chambre.

Un but de l'invention est donc de proposer un dispositif permettant un meilleur amortissement des chocs.

A cet effet, l'invention a pour objet un dispositif de sécurité du type précité, dans lequel le système gonflable comprend au moins un premier film et un deuxième film fixés l'un contre l'autre le long de soudures de manière à définir une pluralité de chambres, chaque chambre étant propre à être gonflée sous l'effet de l'injection du gaz sous pression dans le système gonflable, lors du passage dudit dispositif de sécurité de l'état désactivé à l'état activé.

En effet, la présence de plusieurs chambres confère au système gonflable la capacité d'amortir efficacement les chocs quelle que soit la zone dudit système gonflable qui est considérée, même dans une région périphérique du système gonflable.

Suivant d'autres aspects avantageux de l'invention, le dispositif de sécurité comporte une ou plusieurs des caractéristiques suivantes, prise(s) isolément ou suivant toute combinaison techniquement possible :
- le premier film et le deuxième film sont transparents à la lumière dans le domaine visible ;
- au moins deux chambres communiquent entre elles ;
- le premier film est extensible et présente un allongement maximal supérieur à 50% ;
- dans l'état désactivé, le premier film et le deuxième film sont au contact l'un de l'autre, sur l'intégralité de leurs surfaces en regard, les chambres ayant alors un volume nul ;
- le dispositif comprend en outre un système de dégonflage propre à évacuer le gaz présent dans les chambres lors du passage de l'état activé à l'état désactivé ;
- le système gonflable est étanche à l'air et/ou à l'eau ;
- le deuxième film comporte une face extérieure propre à être appliquée au contact de ladite surface externe du véhicule ;
- lors du passage de l'état désactivé à l'état activé, le système de gonflage est propre à injecter un volume de gaz prédéterminé dans le système gonflable au cours d'une durée inférieure à 60 ms, avantageusement inférieure à 45 ms, par exemple inférieure ou égale à 30 ms ;
- dans l'état activé, la distance maximale entre le premier film et le deuxième film est supérieure à 30 mm, avantageusement supérieure à 40 mm, par exemple supérieure ou égale à 60 mm ;
- dans l'état activé, la pression du gaz dans les chambres est supérieure à 1 bar, avantageusement supérieure à 2 bars, par exemple supérieure ou égale à 2,5 bars ;
- les soudures sont fusibles.

En outre, l'invention a pour objet un véhicule comprenant un dispositif de sécurité tel que défini ci-dessus, le système gonflable étant fixé sur une surface dudit véhicule, notamment une surface vitrée du véhicule, en particulier un pare-brise du véhicule.

Suivant un autre aspect avantageux de l'invention, le véhicule est un véhicule ferroviaire, notamment un tramway.

L'invention sera mieux comprise à l'aide de la description qui va suivre, donnée uniquement à titre d'exemple non limitatif et faite en se référant aux dessins annexés sur lesquels :
- la figure 1 est une vue de face d'un véhicule ferroviaire comportant un dispositif de sécurité selon l'invention ;
- la figure 2 est un détail d'une vue en section selon un plan horizontal du véhicule ferroviaire de la figure 1, le dispositif de sécurité étant dans un état désactivé et réalisé selon un premier mode de réalisation ;
- la figure 3 est un détail d'une vue en section selon un plan horizontal du véhicule ferroviaire de la figure 1, le dispositif de sécurité étant dans un état désactivé et réalisé selon un second mode de réalisation ;
- la figure 4 est la vue de la figure 2, le dispositif de sécurité étant dans un état activé.

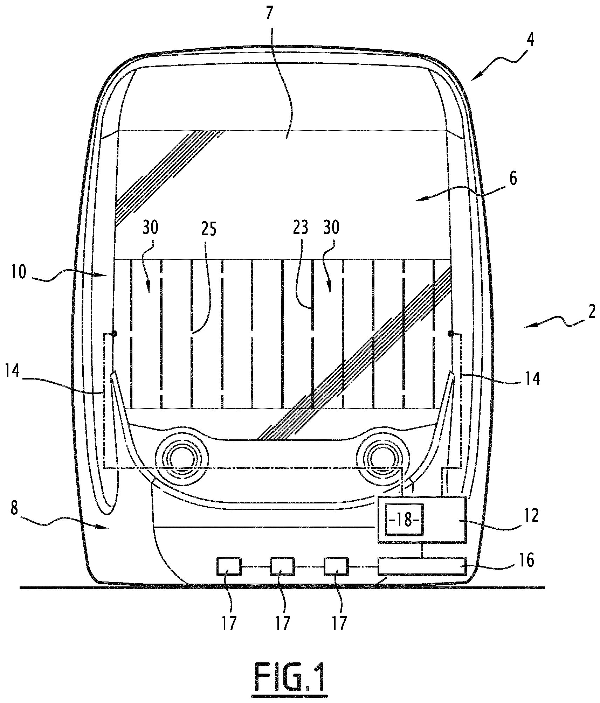

Un dispositif de sécurité 2 selon l'invention est représenté sur la figure 1. Le dispositif de sécurité 2 est embarqué à bord d'un véhicule 4.

Le dispositif de sécurité 2 présente soit un état désactivé, soit un état activé. Notamment, dans l'état activé, le dispositif de sécurité 2 est propre à amortir le choc d'un piéton contre le véhicule 4, notamment amortir le choc de la tête du piéton contre le véhicule 4.

Le dispositif de sécurité 2 est propre à passer de l'état désactivé à l'état activé en cas d'impact, au niveau d'une partie prédéterminée du véhicule 4.

Le véhicule 4 est de préférence un véhicule ferroviaire, de préférence encore un tramway.

De façon classique, le véhicule 4 comporte, sur sa face avant, un pare-brise 6 et un pare-chocs 8, disposé en dessous du pare-brise 6 et en saillie par rapport à ce dernier selon un axe longitudinal du tramway. Le pare-brise 6 comprend une surface externe 7. Le pare-brise 6 est transparent pour permettre à un conducteur du tramway d'avoir une vue directe sur l'environnement du tramway.

Le dispositif de sécurité 2 comporte un système gonflable 10 et un système de gonflage 12 du système gonflable 10.

Le dispositif de sécurité 2 comporte également des conduites d'amenée de gaz 14 entre le système de gonflage 12 et le système gonflable 10. En particulier, chaque conduite d'amenée de gaz 14 est connectée à une valve d'admission de gaz sous pression prévue sur le système gonflable 10.

Le dispositif de sécurité 2 comporte en outre une unité de commande 16 et au moins un capteur d'impact 17. Sur la figure 1, le dispositif de sécurité 2 comporte par exemple trois capteurs d'impact 17.

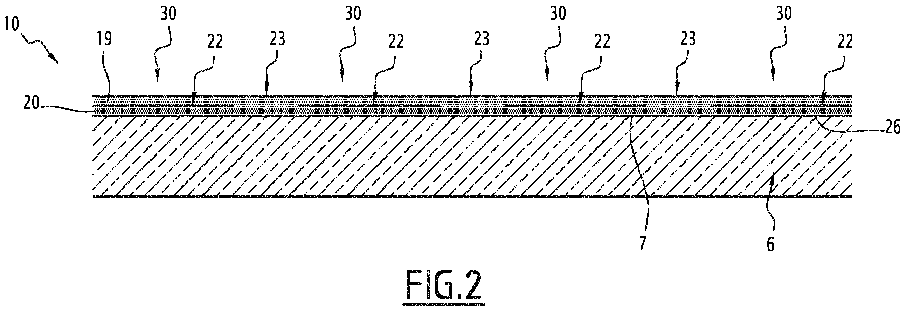

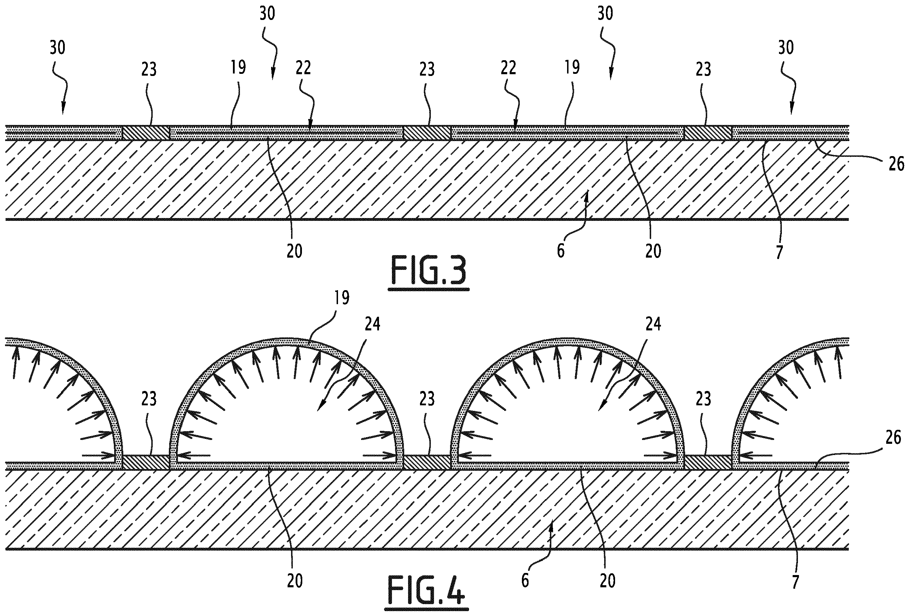

Le système gonflable 10, qui sera décrit en détail ci-dessous en référence aux figures 2 et 3, est propre à recevoir un gaz sous pression. En particulier, le système gonflable 10 est propre à se gonfler sous l'effet du gaz sous pression, fourni, via les conduites 14, par le système de gonflage 12.

Le système gonflable 10 est propre à être fixé au véhicule 4 pour recouvrir une surface externe du véhicule 4, de préférence au moins une partie de la surface externe 7 du pare-brise 6, se situant sensiblement à une hauteur correspondant à la tête d'un piéton.

Le système de gonflage 12 est propre à fournir du gaz sous pression au système gonflable 10. Par exemple, le système de gonflage 12 est propre à injecter une quantité de gaz prédéterminée dans le système gonflable 10. Avantageusement, le système de gonflage 12 est propre à injecter la quantité de gaz prédéterminée dans le système gonflable 10 au cours d'une durée inférieure à 60 ms, avantageusement inférieure à 45 ms, par exemple de l'ordre de 30 ms.

Le système de gonflage 12 comporte une réserve de gaz 18 dédiée, pour alimenter le système gonflable 10 en gaz sous pression. En variante, le système de gonflage 12 est propre à prélever le gaz à fournir au système gonflable 10 dans un circuit pneumatique de bord du véhicule 4.

Pour libérer le gaz sous pression de la réserve 18 afin de gonfler instantanément le système gonflable 10, le système de gonflage 12 comporte une vanne pyrotechnique ou un percuteur mécanique.

Les capteurs d'impact 17 sont propres à détecter un impact dans une zone prédéterminée, par exemple un pare-chocs, du véhicule 4. Avantageusement, les capteurs d'impact 17 sont propres à détecter un impact contre le pare-chocs avant 8, par exemple un impact d'un piéton contre le pare-chocs 8.

Les capteurs 17 sont connectés à l'unité de commande 16 pour lui transmettre un signal d'alerte en cas de détection d'un impact.

L'unité de commande 16 est reliée au système de gonflage 12. L'unité de commande 16 est propre à commander l'activation du système de gonflage 12 pour gonfler le système gonflable 10. En particulier, l'unité de commande 16 est propre à commander l'activation du système de gonflage 12 lors de la réception d'un signal d'alerte en provenance d'au moins un des capteurs d'impact 17.

De préférence, le dispositif de sécurité 2 comprend en outre un système de dégonflage (non représenté) propre à évacuer le gaz présent dans le système gonflable 10. Par exemple le système de dégonflage comporte au moins un évent.

En variante, le système de dégonflage comporte une pompe propre à évacuer le gaz présent dans le système gonflable 10. Par exemple, la pompe communique avec le système gonflable 10 par les conduites 14.

Le système gonflable 10 va maintenant être décrit en référence aux figures 1 à 4.

Le système gonflable 10 comporte une pluralité de zones gonflables 30. Les zones gonflables 30 sont séparées entre elles par une zone de jonction 23, de type soudure non-fusible ou soudure permanente.

Dans un premier mode de réalisation illustré sur la figure 2, le système gonflable 10 comprend un premier film 19 et un deuxième film 20.

Pour réaliser le système gonflable 10, le premier film 19 et le deuxième film 20 sont appliqués l'un contre l'autre. Puis, ils sont fixés entre eux le long de soudures 22, de type fusibles ou non-permanentes, chaque soudure 22 définissant une zone gonflable 30. Ensuite, une zone de jonction 23 est créée entre chaque zone gonflable 30 afin de maintenir en contact de manière permanente le premier film 19 et le deuxième film 20 entre chaque zone gonflable 30.

Dans un second mode de réalisation illustré sur la figure 3, chaque zone gonflable 30 comprend un premier film 19 et un deuxième film 20. Pour réaliser le système gonflable 10, pour chaque zone gonflable 30, le premier film 19 et le deuxième film 20 sont appliqués l'un contre l'autre. Puis, ils sont fixés entre eux le long de soudures 22, de type fusibles ou non-permanentes, chaque soudure 22 définissant une zone gonflable 30. Ensuite, une zone de jonction 23 est ajoutée entre chaque zone gonflable 30 afin de maintenir en contact de manière permanente, entre chaque zone gonflable 30, les extrémités du premier film 19 et le deuxième film 20 de zones gonflables 30 adjacentes.

Par exemple, les soudures 22 et les zones de jonction 23 sont réalisées en mettant en oeuvre une technique par ultrasons.

Par exemple, le premier film 19 et le deuxième film 20 sont identiques.

Le premier film 19 et le deuxième film 20 sont par exemple des films en matériau plastique.

Avantageusement, le premier film 19 est imperméable à l'air.

De préférence, le premier film 19 présente des propriétés anti-rayures.

De préférence, le premier film 19 présente est résistant à l'humidité.

Le premier film 19 est extensible. De préférence, le film externe 19 présente un allongement maximal supérieur à 50%.

Le premier film 19 et le deuxième film 20, ainsi que les zones de jonction 23 sont transparents à la lumière dans le domaine visible. Ainsi, le système gonflable 10 est transparent à la lumière dans le domaine visible.

Pour chaque zone gonflable 30, les soudures 22 délimitent entre les films 19 et 20 une chambre 24. Les chambres 24 sont propres à recevoir le gaz fourni par le système de gonflage 12 pour permettre le gonflage du système gonflable 10.

Dans l'état inactivé, les chambres 24 sont vides et de volume nul, tandis que dans l'état activé du système gonflable 10, le premier film 19 est, au niveau de chaque chambre 24, repoussé à l'écart du deuxième film 20. Dans cet état, les zones de jonction 23 maintiennent en contact les films 19 et 20 aux extrémités de chaque chambre 24.

Dans le mode de réalisation représenté sur les figures, chaque chambre 24 prend la forme d'un demi-cylindre, dont l'axe s'étend sensiblement parallèlement à un axe vertical du tramway. Les axes des différentes chambres 24 sont parallèles entre eux.

De préférence, les chambres 24 présentent une étendue transversale comprise entre 100 mm et 200 mm.

De préférence, les soudures 22 présentent une étendue transversale comprise entre 100 mm et 200 mm.

De préférence, les zones de jonction 23 présentent une étendue transversale comprise entre 3 mm et 10 mm.

Avantageusement, et comme cela est représenté sur la figure 1, certaines des zones de jonction 23, et les soudures 22 associées, sont discontinues pour définir des passages 25 de gaz entre chambres 24 adjacentes.

Le deuxième film 20 comporte une face extérieure 26 appliquée contre la surface externe 7 du pare-brise 6, la face extérieure 26 étant la face qui est orientée à l'opposé du premier film 19, par rapport à la soudure 22.

Avantageusement, la face extérieure 26 du deuxième film 20 est collée à la surface externe 7 du pare-brise 6. Avantageusement, la colle utilisée pour le collage du deuxième film 20 sur le pare-brise 6 est transparente à la lumière dans le domaine visible.

Dans le second mode de réalisation, chaque zone de jonction 23 est collée de manière analogue.

En fonctionnement, le dispositif de sécurité 2 est d'abord dans l'état désactivé. Comme illustré par la figure 3, les chambres 24 sont vides de gaz et le premier film 19 est en contact du deuxième film 20 pour chaque zone gonflable 30.

Si au moins un capteur 17 détecte un impact dans la zone prédéterminée, le ou les capteurs 17 émettent un signal d'alerte à destination de l'unité de commande 16.

L'unité de commande 16 commande alors le système de gonflage 12 pour alimenter le système gonflable 10 en gaz sous pression. Le gaz sous pression gonfle les chambres 24 du système gonflable 10. Le dispositif de sécurité 2 se retrouve alors dans son état activé.

Avantageusement, le système de sécurité 2 est propre à passer de l'état désactivé à l'état activé en une durée inférieure à 60 ms, avantageusement inférieure à 45 ms, par exemple inférieure ou égale à 30 ms.

Dans l'état activé, la pression du gaz régnant dans les chambres 24 est supérieure à 1 bar, avantageusement supérieure à deux bars, par exemple supérieure ou égale à 2,5 bar.

En outre, dans l'état activé, la distance maximale entre le premier film 19 et le deuxième film 20 de chaque zone gonflable 30, c'est-à-dire l'épaisseur du système gonflable 10, est supérieure à 30 mm, avantageusement supérieure à 40 mm, par exemple supérieure ou égale à 60 mm. Cette distance est commune à toutes les chambres 24, de sorte que l'épaisseur du système gonflable 10 est uniforme sur l'ensemble de la surface du véhicule 4 recouverte par le système gonflable 10.

A l'issue d'une durée prédéterminée ou, en variante, sur commande du conducteur, l'unité de commande 16 commande le système de dégonflage pour évacuer le gaz du système gonflable 10.

La présence d'une pluralité de chambres 24 conduit à un meilleur amortissement sur l'ensemble de la surface du système gonflable 10 que dans l'état de la technique.

La présence des détecteurs 17 permet l'activation du dispositif de sécurité 2 uniquement quand cela est nécessaire. Ainsi, le système gonflable 10 ne constitue pas de gêne pour le conducteur du véhicule 4 quand le dispositif de sécurité 2 est dans son état désactivé.

En outre, le fait que le premier film 19 et le deuxième film 20 soient transparents à la lumière permet de ne pas altérer le champ de vision du conducteur du véhicule 4.

Le fait que les chambres 24 communiquent entre elles par l'intermédiaire des passages 25 dans les zones de jonction 23 permanentes permet un gonflage plus rapide et homogène du système gonflable 10 lors du passage du dispositif de sécurité 2 à l'état activé.

En variante, les chambres 24 sont étanches entre elles, et alimentées en gaz sous pression par des piquages individuels sur une conduite d'amenée de gaz circulant par exemple le long du bord inférieur du système gonflable 10, sous le pare-brise 6.

## Revendications

1. Dispositif de sécurité (2) pour un véhicule (4), comprenant un système gonflable (10) propre à être disposé devant une surface externe (7) dudit véhicule (4), au moins un capteur (17) propre à détecter un impact dans une zone prédéterminée du véhicule (4), et un système de gonflage (12) propre à injecter un gaz sous pression dans le système gonflable (10), lors de la détection d'un impact par le ou les capteurs (17) et le passage du dispositif de sécurité (2) d'un état désactivé à un état activé,
le dispositif (2) étant **caractérisé en ce que** le système gonflable (10) comporte une pluralité de zones gonflables (30) séparées entre elles par une zone de jonction (23) du type soudure non-fusible ou soudure permanente,
une zone gonflable (30) comprenant au moins un premier film (19) et un deuxième film (20) fixés l'un contre l'autre le long de soudures (22) de type soudure fusible ou soudure non-permanente, pour chaque zone gonflable (30), les soudures (22) de type soudure fusible ou soudure non-permanente délimitent entre les films (19, 20) une chambre (24),
chaque chambre (24) étant propre à être gonflée sous l'effet de l'injection du gaz sous pression dans le système gonflable (10), lors du passage dudit dispositif de sécurité (2) de l'état désactivé à l'état activé.

2. Dispositif (2) selon la revendication 1, **caractérisé en ce que** le premier film (19) et le deuxième film (20) sont transparents à la lumière dans le domaine visible.

3. Dispositif (2) selon l'une quelconque des revendications précédentes, **caractérisé en ce qu'**au moins deux chambres (24) communiquent entre elles.

4. Dispositif (2) selon l'une quelconque des revendications précédentes, **caractérisé en ce que** le premier film (19) est extensible et présente un allongement maximal supérieur à 50%.

5. Dispositif (2) selon l'une quelconque des revendications précédentes, **caractérisé en ce que**, dans l'état désactivé, le premier film (19) et le deuxième film (20) sont au contact l'un de l'autre, sur l'intégralité de leurs surfaces en regard, les chambres (24) ayant alors un volume nul.

6. Dispositif (2) selon l'une quelconque des revendications précédentes, **caractérisé en ce qu'**il comprend en outre un système de dégonflage propre à évacuer le gaz présent dans les chambres (24) lors du passage de l'état activé à l'état désactivé.

7. Dispositif (2) selon l'une quelconque des revendications précédentes, **caractérisé en ce que** le système gonflable (10) est étanche à l'air et/ou à l'eau.

8. Dispositif (2) selon l'une quelconque des revendications précédentes, **caractérisé en ce que** le deuxième film (20) comporte une face extérieure (26) propre à être appliquée au contact de ladite surface externe (7) du véhicule (4).

9. Véhicule (4) **caractérisé en ce qu'**il comprend un dispositif de sécurité (2) selon l'une quelconque des revendications 1 à 8, le système gonflable (10) étant fixé sur une surface (7) dudit véhicule (4), notamment une surface vitrée du véhicule (4), en particulier un pare-brise (6) du véhicule (4).

10. Véhicule (4) selon la revendication 9, **caractérisé en ce qu'**il est un véhicule ferroviaire, notamment un tramway.

## Patentansprüche

1. Sicherheits-Vorrichtung (2) für eine Fahrzeug (4), aufweisend ein aufblasbares System (10), das imstande ist vor einer Außenfläche (7) des besagten Fahrzeugs (4) angeordnet zu werden, wenigstens einen Sensor (17), der imstande ist, einen Aufprall in einer vorbestimmten Zone des Fahrzeugs (4) zu detektieren, und ein Aufblas-System (12), das imstande ist, ein Gas unter Druck in das aufblasbare System (10) zu injizieren auf die Detektion eines Aufpralls mittels des oder der Sensoren (17) und den Übergang der Sicherheits-Vorrichtung (2) von einem Deaktiviert-Zustand in einen Aktiviert-Zustand, wobei die Vorrichtung (2) **dadurch gekennzeichnet ist, dass** das aufblasbare System (10) eine Mehrzahl von aufblasbaren Zonen (30) aufweist, die untereinander separiert sind durch eine Verbindungszone (23) des Typs nicht-schmelzbare Schweißnaht oder permanente Schweißnaht,
wobei eine aufblasbare Zone (30) wenigstens einen ersten Film (19) und einen zweiten Film (20) aufweist, die aneinander fixiert sind entlang von Schweißnähten (22) des Typs schmelzbare Schweißnaht oder nicht-permanente Schweißnaht, wobei für jede aufblasbare Zone (30) die Schweißnähte (22) vom Typ schmelzbare Schweißnaht oder nicht-permanente Schweißnaht zwischen den Filmen (19, 20) eine Kammer (24) begrenzen,
wobei jede Kammer (24) imstande ist, unter der Wirkung des Injizierens des Gases unter Druck in das aufblasbare System (10) aufgeblasen zu werden auf den Übergang der besagten Sicherheits-Vorrichtung (20) vom Deaktiviert-Zustand in den Aktiviert-Zustand.

2. Vorrichtung (2) gemäß Anspruch 1, **dadurch gekennzeichnet, dass** der erste Film (1) und der zweite Film (20) transparent sind für das Licht im sichtbaren Bereich.

3. Vorrichtung (2) gemäß irgendeinem der vorhergehenden Ansprüche, **dadurch gekennzeichnet, dass** wenigstens zwei Kammern (24) miteinander kommunizieren.

4. Vorrichtung (2) gemäß irgendeinem der vorhergehenden Ansprüche, **dadurch gekennzeichnet, dass** der erste Film (19) dehnbar ist und eine maximale Dehnung von größer als 50% hat.

5. Vorrichtung (2) gemäß irgendeinem der vorhergehenden Ansprüche, **dadurch gekennzeichnet, dass** im Deaktiviert-Zustand der erste Film (19) und der zweite Film (20) miteinander im Kontakt sind über die Gesamtheit ihrer zugewandten Flächen, wobei die Kammern (24) daher ein Volumen von null haben.

6. Vorrichtung (2) gemäß irgendeinem der vorhergehenden Ansprüche, **dadurch gekennzeichnet, dass** sie ferner aufweist ein Luftablass-System, das imstande ist, das in den Kammern (24) vorliegende Gas zu evakuieren auf den Übergang vom Aktiviert-Zustand in den Deaktiviert-Zustand.

7. Vorrichtung (2) gemäß irgendeinem der vorhergehenden Ansprüche, **dadurch gekennzeichnet, dass** das aufblasbare System (10) luft- und/oder wasserdicht ist.

8. Vorrichtung (2) gemäß irgendeinem der vorhergehenden Ansprüche, **dadurch gekennzeichnet, dass** der zweite Film (20) eine Außenfläche (26) aufweist, die imstande ist in Kontakt mit der besagten Außenfläche (7) des Fahrzeugs (4) gebracht zu werden.

9. Fahrzeug (4) **dadurch gekennzeichnet, dass** es eine Sicherheits-Vorrichtung (2) gemäß irgendeinem der Ansprüche 1 bis 8 aufweist, wobei das aufblasbare System (10) auf einer Fläche (7) des besagten Fahrzeugs (4) fixiert ist, insbesondere einer Glasfläche des Fahrzeugs (4), im Besonderen einer Windschutzscheibe (6) des Fahrzeugs (4).

10. Fahrzeug (4) gemäß Anspruch 9, **dadurch gekennzeichnet, dass** es ein Schienenfahrzeug, insbesondere eine Straßenbahn ist.

## Claims

1. A protection device (2) for a vehicle (4), comprising an inflatable system (10) to be positioned in front of the outer surface (7) of said vehicle (4), at least one sensor (17) for detecting an impact in a predetermined zone of the vehicle (4), and an inflation system (12) for injecting a pressurized gas into the inflatable system (10) when an impact is detected by said at least one sensor (17) so that the protection device (2) goes from a deactivated state to an activated state,
the device (2) being **characterized in that** the inflatable system (10) comprises a plurality of inflatable zones (30) separated one from the other by junction zones (23) of the type non-fusible weld or permanent weld,
an inflatable zone (30) comprising at least one first film (19) and one second film (20) fastened against one another along a plurality of welds (22) of the type fusible weld or non-permanent weld,
for each inflatable zone (30), the welds (22) of the type fusible weld or non-permanent weld, defining between the films (19, 20) a chamber (24),
each chamber (24) being able to be inflated under the effect of the injection of the pressurized gas into the inflatable system (10), when the protection device (2) goes from the deactivated state to the activated state.

2. The device (2) according to claim 1, **characterized in that** the first film (19) and the second film (20) are transparent to light in the visible domain.

3. The device (2) according to any one of the preceding claims, **characterized in that** at least two chambers (24) communicate with one another.

4. The device (2) according to any one of the preceding claims, **characterized in that** the first film (19) is extendable and has a maximum elongation greater than 50%.

5. The device (2) according to any one of the preceding claims, **characterized in that**, in the deactivated state, the first film (19) and the second film (20) are in contact with one another, over their entire opposite surfaces, the chambers (24) then having a zero volume.

6. The device (2) according to any one of the preceding claims, **characterized in that** it further comprises a deflating system for discharging the gas present in the chambers (24) when going from the activated state to the deactivated state.

7. The device (2) according to any one of the preceding claims, **characterized in that** the inflatable system (10) is airtight and/or watertight.

8. The device (2) according to any one of the preceding claims, **characterized in that** the second film (20) includes an outer face (26) that can be pressed in contact with said outer surface (7) of the vehicle (4).

9. A vehicle (4), **characterized in that** it comprises a protection device (2) according to any one of claims 1 to 8, the inflatable system (10) being fastened on the surface (7) of said vehicle (4), in particular a glass surface of the vehicle (4), in particular a windshield (6) of the vehicle (4).

10. The vehicle (4) according to claim 9, **characterized in that** it is a railway vehicle, in particular a tram.
